# EUROPEAN PATENT APPLICATION

(11) **EP 4 835 559 A1**
(43) Date of publication of application: **04.11.2026**
(21) Application number: 24912468.6
(22) Date of filing: 16.12.2024
(51) Int. Cl.: G02F 1/35, G06E 3/00, G21K 1/00

(54) **PULSED LIGHT OUTPUT SYSTEM, PULSED LIGHT OUTPUT METHOD, NEUTRAL ATOM EXCITATION METHOD, AND QUANTUM COMPUTER DEVICE**

(30) Priority: 28.12.2023 JP 2023222087
(71) Applicant: Inter-University Research Institute Corporation National Institutes of Natural Sciences, Tokyo 181-8588 (JP)
(72) Inventor: MATSUBARA Takuya, Okazaki-shi, Aichi 444-8585 (JP); DE LESELEUC Sylvain, Okazaki-shi, Aichi 444-8585 (JP); TOMITA Takafumi, Okazaki-shi, Aichi 444-8585 (JP); SUGAWA Seiji, Okazaki-shi, Aichi 444-8585 (JP); OHMORI Kenji, Okazaki-shi, Aichi 444-8585 (JP)
(74) Representative: Hautier IP - MC/EP
(86) International application number: PCT/JP2024/044357
(87) International publication number: WO 2025/142579

(57) **Abstract**

A pulsed light output system is configured to output pulsed light for controlling an energy state of an atom, the pulsed light output system including: a first chirped light generation device configured to generate first chirped light based on first pulsed light; a second chirped light generation device configured to generate second chirped light based on second pulsed light; and a third pulsed light generation device configured to generate third pulsed light based on the first chirped light and the second chirped light, and output the third pulsed light to the atom, in which the first pulsed light and the second pulsed light have different wavelengths, one of the first chirped light and the second chirped light is down-chirped, and the other is up-chirped, and the first chirped light and the second chirped light are set to have equal absolute values of rates of change in frequency with respect to time.

## Description

### TECHNICAL FIELD

The present invention relates to a pulsed light output system, a pulsed light output method, a neutral atom excitation method, and a quantum computer device.

Priority is claimed on Japanese Patent Application No. 2023-222087, filed on December 28, 2023, the content of which is incorporated herein by reference.

### BACKGROUND ART

Research on quantum computers is being conducted. The quantum computer is a computer that is expected to achieve a dramatically fast computation speed by utilizing the principles of quantum mechanics such as quantum superposition, and to solve problems that are difficult to solve with a classical computer, thereby bringing about disruptive innovation in society. The quantum computer can be classified into several types such as a superconducting type, an ion-trap type, and a cold-atom type, depending on the method of implementation.

In the cold-atom type quantum computer, neutral atomic gas is cooled using laser light and used as a qubit. The cooled atoms are trapped by optical tweezers, and arranged at appropriate positions. The optical tweezers refer to trapping microparticles such as atoms by focusing laser light. A configuration in which a large number of optical tweezers are arranged in an array is referred to as an optical tweezer array.

In the cold-atom type quantum computer, in principle, adjacent atoms trapped by the optical tweezers are irradiated with laser light having a wavelength different from that of laser light used for cooling the atoms, and each atom is excited to an electronic state having a large orbital radius (Rydberg state). The atoms excited to the Rydberg state have a large distance between the atomic nucleus (+) and the electron (-), and have large electric dipole moment. As a result, a quantum entanglement state serving as a basis for quantum computation is formed by interaction between adjacent Rydberg atoms. When a continuous-wave laser is used for this Rydberg excitation, a period of this interaction becomes as long as a microsecond level, and during the period, quantum information is lost due to decoherence. As means for greatly reducing the influence of this decoherence, a method has been developed in which atoms are excited within a time of less than one nanosecond by pulsed laser light.

On the other hand, the energy levels of the Rydberg states are close to each other. Therefore, in order to excite an atom to a specific Rydberg state, laser light having an extremely narrow frequency bandwidth (narrowband) corresponding thereto is necessary. However, since the pulsed laser light has a wider frequency bandwidth (broadband) than continuous-wave laser light, there has been a problem in that a plurality of Rydberg states are excited simultaneously. Therefore, narrowband pulsed laser light capable of excitation to a desired specific energy level while avoiding decoherence has been desired.

As a method of generating narrowband pulsed light, for example, Non Patent Document 1 discloses a method of generating a narrowband second harmonic using a chirp element and a non-linear optical element. In addition, Patent Document 1 discloses a method of generating light having a narrower bandwidth by generating chirp and sum-frequency light from single-wavelength light.

### Citation List

### Patent Document

Patent Document 1: Published Japanese Translation No. 2017-530403, of the PCT International Publication

### Non Patent Document

Non Patent Document 1: F. Raoult et al., "Efficient generation of narrow-bandwidth picosecond pulses by frequency doubling of femtosecond chirped pulses," Opt. Lett. 23, 1117-1119 (1998)

### SUMMARY OF INVENTION

### Technical Problem

However, in applications such as cold-atom type quantum computers, a wavelength conversion system using two input light beams having different wavelengths, including design guidelines for chirp element characteristics necessary for realizing narrowing of the bandwidth, has not been known, and there has been a problem in that no method exists for selectively exciting atoms to a desired energy level using a pulsed laser.

An object of the present invention is to provide a pulsed light output system, a pulsed light output method, a neutral atom excitation method, and a quantum computer device that output narrowband pulsed light suitable for Rydberg excitation.

### Solution to Problem

An aspect of the present invention relates to a pulsed light output system is configured to output pulsed light for controlling an energy state of an atom, the pulsed light output system including: a first chirped light generation device configured to generate first chirped light based on first pulsed light; a second chirped light generation device configured to generate second chirped light based on second pulsed light; and a third pulsed light generation device configured to generate third pulsed light based on the first chirped light and the second chirped light, and output the third pulsed light to the atom, in which the first pulsed light and the second pulsed light have different wavelengths, one of the first chirped light and the second chirped light is down-chirped, and the other is up-chirped, and the first chirped light and the second chirped light are set to have equal absolute values of rates of change in frequency with respect to time. Advantageous Effects of Invention

According to the present invention, it is possible to output the narrowband pulsed light suitable for Rydberg excitation.

### BRIEF DESCRIPTION OF DRAWINGS

[FIG. 1] A diagram showing a configuration of a pulsed light output system according to the present embodiment.
[FIG. 2] A diagram showing a relationship between time and frequency at which first chirped light and second chirped light are input to a third pulsed light generation device, and generation of third pulsed light.
[FIG. 3] A flowchart showing an operation of the pulsed light output system according to the present embodiment.
[FIG. 4] A diagram showing an example of a configuration in which second pulsed light P2 is generated based on first pulsed light P1.
[FIG. 5] A diagram showing a Rydberg-state excitation probability when a wavelength of third pulsed light P3 is changed.

### DESCRIPTION OF EMBODIMENTS

Hereinafter, an embodiment of the present invention will be described in detail with reference to the accompanying drawings.

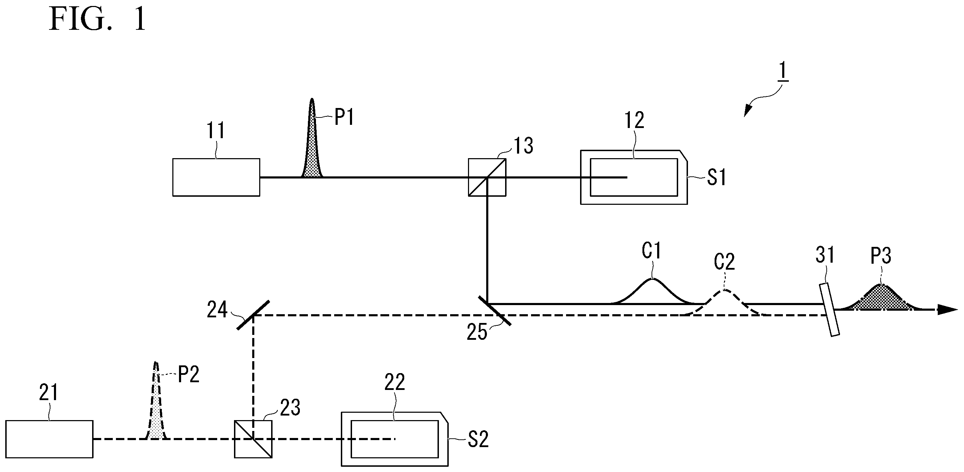

FIG. 1 is a diagram showing a configuration of a pulsed light output system 1 according to the present embodiment. The pulsed light output system 1 outputs pulsed light. It is expected that the output pulsed light is applied to an atom to excite the atom to a Rydberg state, and the influence of decoherence, which is a problem in excitation by a continuous-wave laser, is significantly reduced.

The pulsed light output system 1 includes a first laser light source 11, a first chirped light generation device 12, a second laser light source 21, a second chirped light generation device 22, and a third pulsed light generation device 31.

The first laser light source 11 outputs first pulsed light P1 to the first chirped light generation device 12.

The first chirped light generation device 12 generates first chirped light C1 based on the first pulsed light P1. The first chirped light generation device 12 outputs the first chirped light C1 to the third pulsed light generation device 31.

The first chirped light generation device 12 is, for example, a chirped Bragg grating (CBG). The chirped Bragg grating may be a reflective volume Bragg grating having a period that changes along a beam propagation direction. The chirped Bragg grating may be an optical fiber in which a grating is formed in a core and a plurality of gratings to be formed have different periods. Since the grating period differs, reflection positions of a low-frequency component and a high-frequency component of incident pulsed light differ, and chirped light is generated by outputting the respective components at different timings. By increasing the grating period from the incident position, the high-frequency component is output from the chirped Bragg grating before the low-frequency component, and down-chirped light is output. By decreasing the grating period from the incident position, the low-frequency component is output from the chirped Bragg grating before the high-frequency component, and up-chirped light is output.

A rate of change (chirp rate) c (s/Hz) of the delay time with respect to the frequency of the first chirped light generation device 12 is set to a value expressed by Expression (1). $c = \frac{1}{2 πab}$ (1)

In Expression (1), a is a frequency bandwidth (Hz) of third pulsed light P3 described below, and b is a narrower frequency bandwidth (Hz) of the frequency bandwidth of the first pulsed light P1 and the frequency bandwidth of the second pulsed light P2 output from the second laser light source 21.

The second laser light source 21 outputs the second pulsed light P2 to the second chirped light generation device 22. The wavelength of the second pulsed light P2 is different from the wavelength of the first pulsed light P1.

The second chirped light generation device 22 generates second chirped light C2 based on the second pulsed light P2. The second chirped light generation device 22 outputs the second chirped light C2 to the third pulsed light generation device 31. The second chirped light generation device 22 is, for example, a chirped Bragg grating, similarly to the first chirped light generation device 12.

The chirp rate of the second chirped light generation device 22 is calculated based on the frequency bandwidth of the third pulsed light P3 and the frequency bandwidth of the second pulsed light P2 by Expression (1), similarly to the first chirped light generation device 12.

One of the first chirped light C1 and the second chirped light C2 is down-chirped, and the other is up-chirped. That is, when the first chirped light C1 is down-chirped such that the frequency decreases with time, the second chirped light C2 is up-chirped such that the frequency increases with time, and when the first chirped light C1 is up-chirped such that the frequency increases with time, the second chirped light C2 is down-chirped such that the frequency decreases with time.

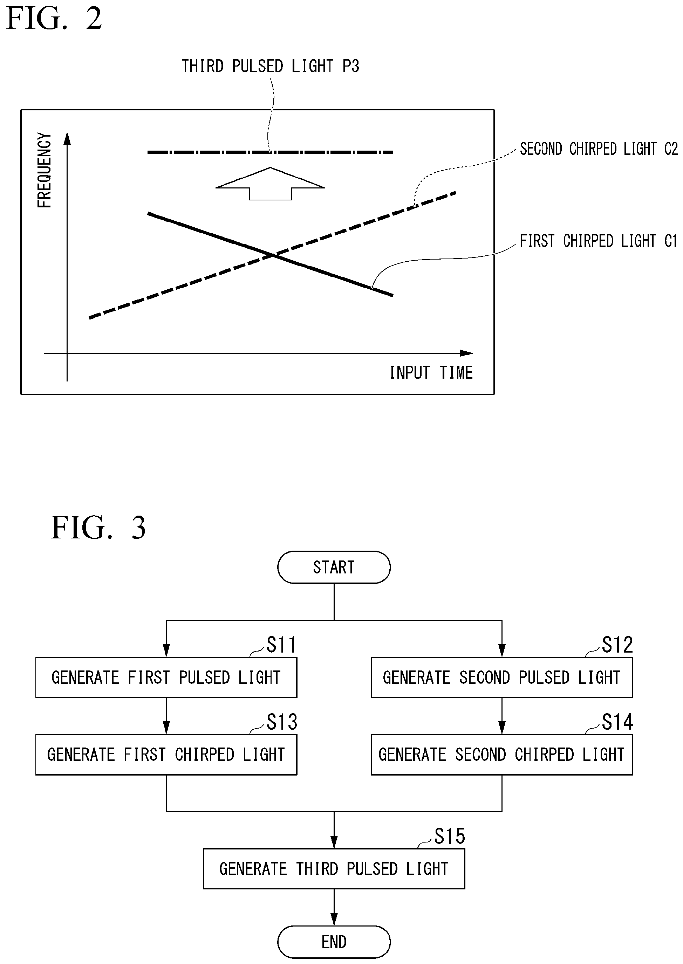

The first chirped light C1 and the second chirped light C2 are input to the third pulsed light generation device 31. FIG. 2 shows a relationship between time and frequency at which the first chirped light C1 and the second chirped light C2 are input to the third pulsed light generation device 31. In FIG. 2, the first chirped light C1 is down-chirped, and the second chirped light C2 is up-chirped. The first chirped light C1 and the second chirped light C2 are generated by selecting the CBG such that the absolute values of the chirp rates of the first chirped light C1 and the second chirped light C2 are equal to each other, in accordance with Expression (1). In FIG. 2, the CBG is selected such that the magnitude of the slope of the graph showing the chirp rate of the first chirped light C1 and the magnitude of the slope of the graph showing the chirp rate of the second chirped light C2 are equal to each other, and the CBG is used as the first chirped light generation device 12 and the second chirped light generation device 22.

The pulsed light output system 1 includes an optical filter, an optical beam splitter, a mirror, an optical circulator, and the like at appropriate positions such that the first chirped light C1 and the second chirped light C2 are input to the third pulsed light generation device 31. In FIG. 1, an optical beam splitter 13 is provided between the first laser light source 11 and the first chirped light generation device 12, an optical beam splitter 23 is provided between the second laser light source 21 and the second chirped light generation device 22, a dichroic mirror 25 is provided at the reflection destination of the optical beam splitter 13, and a mirror 24 is provided at the reflection destination of the optical beam splitter 23.

The optical beam splitter 13 reflects the first chirped light C1 reflected from the first chirped light generation device 12, and the first chirped light C1 is incident on the dichroic mirror 25. The first chirped light C1 is reflected by the dichroic mirror 25, and is input to the third pulsed light generation device 31.

The optical beam splitter 23 reflects the second chirped light C2 reflected from the second chirped light generation device 22, and the second chirped light C2 is incident on the mirror 24. The second chirped light C2 is reflected by the mirror 24, is transmitted through the dichroic mirror 25, and is input to the third pulsed light generation device 31.

The third pulsed light generation device 31 generates the third pulsed light P3 based on the first chirped light C1 and the second chirped light C2. The third pulsed light generation device 31 includes, for example, a nonlinear crystal (for example, a BBO crystal), and generates third pulsed light P3 by sum-frequency generation.

In the pulsed light output system 1, the delay time between the first chirped light C1 and the second chirped light C2 may be adjustable. For example, as shown in FIG. 1, the pulsed light output system 1 includes a stage S1 and/or a stage S2. The first chirped light generation device 12 is installed on the stage S1. The second chirped light generation device 22 is installed on the stage S2. The stage S1 and the stage S2 are movable. By moving the stage S1 or the stage S2, the propagation distance of the first chirped light C1 or the second chirped light C2 is adjusted, and the delay time between the first chirped light C1 and the second chirped light C2 is adjusted. The first laser light source 11 or the second laser light source 21 may be installed on the movable stage, and the delay time between the first chirped light C1 and the second chirped light C2 may be adjusted by moving the stage.

The stage S1, the stage S2, or the movable stage installed below the first laser light source 11 or the second laser light source 21 is an example of a device that adjusts the delay time of the first pulsed light and/or the second pulsed light.

By this delay time adjustment, the wavelength of the ultimately obtained third pulsed light P3 can be finely adjusted. This makes it possible to select a predetermined Rydberg excited state from among a plurality of Rydberg states of the atom to be excited, and to excite the atom to the selected predetermined Rydberg excited state.

FIG. 2 is a diagram showing the generation of the third pulsed light P3. The third pulsed light P3 is generated by sum-frequency generation from portions of the first chirped light C1 and the second chirped light C2 that are input at the same timing in time. Since one of the first chirped light C1 and the second chirped light C2 is down-chirped and the other is up-chirped, and the absolute values of the chirp rates of the first chirped light C1 and the second chirped light C2 are set to be equal to each other, the chirp rate of the generated third pulsed light P3 is offset and becomes a value close to zero. As a result, the third pulsed light generation device 31 can generate the pulsed light having a narrow frequency bandwidth.

FIG. 3 is a flowchart showing an operation of the pulsed light output system 1 according to the present embodiment. First, the first laser light source 11 generates the first pulsed light P1, and outputs the first pulsed light P1 to the first chirped light generation device 12 (step S11). In parallel with step S11, the second laser light source 21 generates the second pulsed light P2, and outputs the second pulsed light P2 to the second chirped light generation device 22 (step S12). Then, the first chirped light generation device 12 generates the first chirped light C1 based on the first pulsed light P1, and outputs the first chirped light C1 to the third pulsed light generation device 31 (step S13). In parallel, the second chirped light generation device 22 generates the second chirped light C2 based on the second pulsed light P2, and outputs the second chirped light C2 to the third pulsed light generation device 31 (step S14). The order of the operations in steps S11 to S14 is merely an example, and the first chirped light C1 may be generated after the first pulsed light P1 is generated, and the second chirped light C2 may be generated after the second pulsed light P2 is generated.

The third pulsed light generation device 31 generates the third pulsed light P3 based on the first chirped light C1 and the second chirped light C2 (step S15).

The second pulsed light P2 may be generated by performing wavelength-conversion on the first pulsed light P1. When the second pulsed light P2 is generated by performing wavelength-conversion on the first pulsed light P1, the pulsed light output system 1 need not include the second laser light source 21. As a result, the pulsed light output system 1 can be implemented with fewer elements.

For example, the wavelength of the first pulsed light P1 is 780 nm, and the wavelength of the second pulsed light P2 is 1260 nm. In such a case, the wavelength of the third pulsed light P3 can be set to 480 nm. A rubidium atom used in a cold-atom type quantum computer is excited to an intermediate level by pulsed light having a wavelength of 780 nm, and is excited to a Rydberg state by pulsed light having a wavelength of 480 nm. Therefore, by irradiating the rubidium atom with the first pulsed light P1, which is pulsed light having a wavelength of 780 nm, and the third pulsed light P3, which is pulsed light having a wavelength of 480 nm, the rubidium atom can be excited to the Rydberg state.

In addition, the wavelength conversion from the light having a wavelength of 780 nm to the light having a wavelength of 1260 nm can be easily performed. Accordingly, when the wavelength of the first pulsed light P1 is 780 nm and the wavelength of the second pulsed light P2 is 1260 nm, the second pulsed light P2 can be easily generated based on the first pulsed light P1.

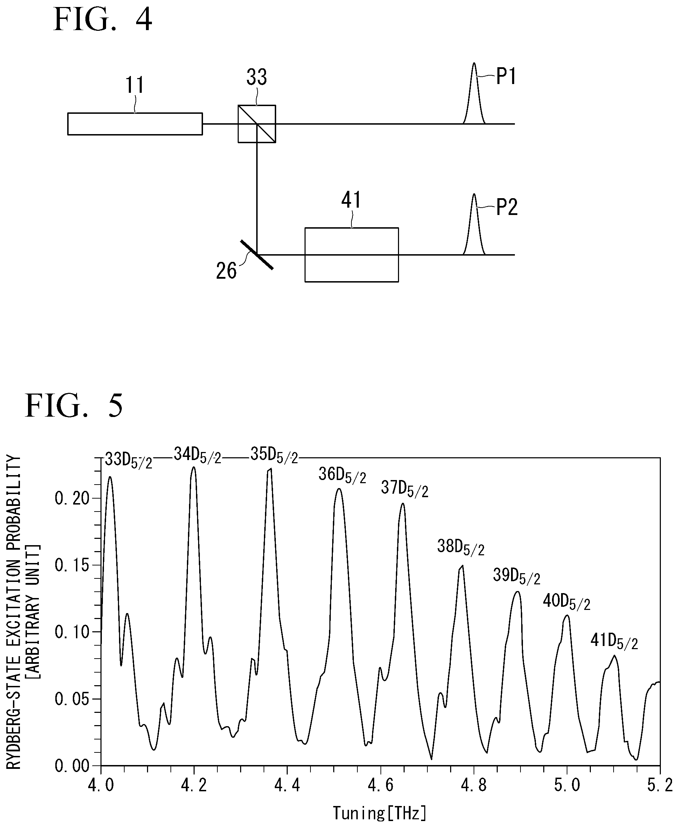

FIG. 4 is an example of a configuration in which the second pulsed light P2 is generated based on the first pulsed light P1. The laser light from the first laser light source 11 having a wavelength of 780 nm is branched into two laser light beams by the half mirror 33, and one laser light is incident on an optical parametric amplifier (OPA) 41, whereby the laser light having a wavelength of 1260 nm corresponding to the second pulsed light P2 can be generated by wavelength conversion.

The wavelengths of the first pulsed light P1 and the second pulsed light P2 may be changed as appropriate depending on the atom whose energy level is to be excited.

The neutral atom can be excited to the Rydberg state by outputting, to the neutral atom, third pulsed light P3 having an appropriate wavelength for the neutral atom from the pulsed light output system 1 according to the present embodiment. In addition, when a quantum computer includes a neutral atom, the neutral atom can be excited to a Rydberg state by outputting third pulsed light P3 having an appropriate wavelength from the pulsed light output system 1 according to the present embodiment to the neutral atom.

### (First Example)

The pulsed light output system 1 having the configuration shown in FIG. 1 was constructed. The wavelength of the first pulsed light P1 output from the first laser light source 11 was 780 nm, and the frequency bandwidth thereof was 1 THz. The chirp rate was calculated with reference to Expression (1), and the chirp element having a chirp rate of 30 ps/THz was used for the first chirped light generation device 12. On the other hand, the second laser light source 21 output second pulsed light P2 having a wavelength of 1260 nm and a frequency bandwidth of 2 THz. The chirp element having a chirp rate of -30 ps/THz was used for the second chirped light generation device 22 as the chirp rate having a sign opposite to that of the first chirped light generation device. Furthermore, a BBO crystal element was provided as the third pulsed light generation device 31, and 480-nm wavelength light, which is sum-frequency light of 780-nm wavelength light and 1260-nm wavelength light, was generated. As a result, characteristics of the generated 480-nm wavelength light included a frequency bandwidth of 50 GHz at a pulse width of 10 ps, and narrowband pulsed light was successfully generated.

### (Comparative Example)

The characteristics of the third pulsed light P3 (wavelength: 480 nm) generated when the chirp element was not used in the same configuration as in FIG. 1 were a frequency bandwidth of 2 THz at a pulse width of 10 ps.

### (Second Example)

It was confirmed that the wavelength of the third pulsed light P3 could be changed by finely adjusting the position of the stage S2 using the stage S2 shown in FIG. 1.

### (Third Example)

After exciting rubidium atoms in an optical dipole trap to a first excited state using first pulsed light P1 (wavelength: 780 nm), the rubidium atoms were excited to a Rydberg state using third pulsed light P3 (wavelength: 480 nm) generated in the first example. Rydberg atoms were ionized by an electrostatic field, and assignment of the Rydberg state was determined from detection times of ions, whereby it was confirmed that rubidium atoms were excited to a single Rydberg state by irradiation with the third pulsed light P3.

### (Fourth Example)

After exciting rubidium atoms in an optical dipole trap to a first excited state using first pulsed light P1, it was confirmed that, using third pulsed light P3 generated in the second example, a predetermined Rydberg excited state can be selected from among a plurality of Rydberg states of the rubidium atoms and the rubidium atoms can be excited to the selected predetermined Rydberg excited state. FIG. 5 shows the Rydberg-state excitation probability when the frequency of the third pulsed light P3 is changed. Here, 33D to 41D indicate individual Rydberg states assigned by static-field ionization. It was demonstrated that, by tuning the wavelength, excitation can be selectively performed to a desired Rydberg state from among a plurality of Rydberg states of rubidium atoms.

As described above, according to the present invention, narrowband pulsed light suitable for Rydberg excitation can be output.

### <Other Embodiments>

Although the embodiment of the present invention has been described in detail with reference to the accompanying drawings, the specific configuration is not limited to the above-described configurations, and various design changes and the like can be made without departing from the gist of the present invention.

In the present embodiment, the phrase "the absolute values of the chirp rates of the first chirped light C1 and the second chirped light C2 are equal to each other" includes not only a case where the absolute value of the chirp rate of the first chirped light C1 and the absolute value of the chirp rate of the second chirped light C2 are equal to each other, but also a case where the difference between the absolute value of the chirp rate of the first chirped light C1 and the absolute value of the chirp rate of the second chirped light C2 is equal to or less than a predetermined value.

For example, in a case where the difference between the absolute value of the chirp rate of the first chirped light C1 and the absolute value of the chirp rate of the second chirped light C2 is equal to or less than 1/2πb², the generated third pulsed light P3 can be made into pulsed light having a narrow band suitable for the Rydberg excitation. Here, b is a narrower frequency bandwidth (Hz) of the frequency bandwidth of the first pulsed light P1 and the frequency bandwidth of the second pulsed light P2 output from the second laser light source 21, which are defined in Expression (1).

### INDUSTRIAL APPLICABILITY

According to the present invention, it is possible to output the narrowband pulsed light suitable for Rydberg excitation.

### REFERENCE SIGNS LIST

1 Pulsed light output system
11 First laser light source
12 First chirped light generation device
13 Optical beam splitter
21 Second laser light source
22 Second chirped light generation device
23 Optical beam splitter
24 Mirror
25 Dichroic mirror
26 Mirror
31 Third pulsed light generation device
33 Half mirror
41 Optical parametric amplifier
P1 First pulsed light
P2 Second pulsed light
P3 Third pulsed light
C1 First chirped light
C2 Second chirped light
S1 Stage
S2 Stage

## Claims

1. A pulsed light output system configured to output pulsed light for controlling an energy state of an atom, the pulsed light output system comprising:
a first chirped light generation device configured to generate first chirped light based on first pulsed light;
a second chirped light generation device configured to generate second chirped light based on second pulsed light; and
a third pulsed light generation device configured to generate third pulsed light based on the first chirped light and the second chirped light, and output the third pulsed light to the atom,
wherein the first pulsed light and the second pulsed light have different wavelengths,
one of the first chirped light and the second chirped light is down-chirped, and the other is up-chirped, and
the first chirped light and the second chirped light have equal absolute values of rates of change in frequency with respect to time.

2. The pulsed light output system according to Claim 1,
wherein the second pulsed light is generated by wavelength-converting the first pulsed light.

3. The pulsed light output system according to Claim 1 or 2,
wherein the wavelength of the first pulsed light is 780 nanometers.

4. The pulsed light output system according to Claim 1 or 2, further comprising:
a device configured to adjust a delay time of the first pulsed light and/or the second pulsed light.

5. The pulsed light output system according to Claim 2,
wherein the second pulsed light is generated by branching the first pulsed light and wavelength-converting the branched first pulsed light.

6. The pulsed light output system according to Claim 1 or 2,
wherein the first pulsed light is applied to the atom to excite the energy state of the atom to a first excited state, and
the third pulsed light is applied to the atom to excite the energy state of the atom from the first excited state to a second excited state.

7. A pulsed light output method of outputting pulsed light for controlling an energy state of an atom, the pulsed light output method comprising:
a first chirped light generation step of generating first chirped light based on first pulsed light;
a second chirped light generation step of generating second chirped light based on second pulsed light; and
a third pulsed light generation step of generating third pulsed light based on the first chirped light and the second chirped light, and outputting the third pulsed light to the atom,
wherein the first pulsed light and the second pulsed light have different wavelengths,
one of the first chirped light and the second chirped light is down-chirped, and the other is up-chirped, and
the first chirped light and the second chirped light have equal absolute values of rates of change in frequency with respect to time.

8. The pulsed light output method according to Claim 7,
wherein the second pulsed light is generated by branching the first pulsed light and wavelength-converting the branched first pulsed light.

9. The pulsed light output method according to Claim 7 or 8,
wherein the first pulsed light is applied to the atom to excite the energy state of the atom to a first excited state, and
the third pulsed light is applied to the atom to excite the energy state of the atom from the first excited state to a second excited state.

10. A neutral atom excitation method comprising:
exciting a neutral atom to a Rydberg state by outputting the pulsed light to the neutral atom using the pulsed light output system according to Claim 1.

11. A quantum computer device using a neutral atom,
wherein the quantum computer device is configured to excite a neutral atom to a Rydberg state by outputting the pulsed light to the neutral atom using the pulsed light output system according to Claim 1.
